# DEMANDE DE BREVET EUROPEEN

(11) **EP 0 633 584 A1**
(43) Date de publication de la demande: **11.01.1995**
(21) Numéro de dépôt: 94401350.7
(22) Date de dépôt: 16.06.1994
(51) Int. Cl.: H01H 9/54, H01H 73/00

(54) **Dispositif de protection et de commande pour charge électrique**

(30) Priorité: 05.07.1993 FR 9308310
(71) Demandeur: SCHNEIDER ELECTRIC SA, F-92100 Boulogne-Billancourt (FR)
(72) Inventeur: Gast, Jean-Noel, F-92500 Rueil Malmaison (FR); Guery, Jean-Pierre, F-78230 Le Pecq (FR); Olifant, Jacques, F-92000 Nanterre (FR)
(74) Mandataire: Carias, Alain

(57) **Abrégé**

Un interrupteur électronique bidirectionnel 30 piloté par un circuit 40 de commande à modulation d'impulsions est placé en série avec un premier chemin de courant C1 actif en marche normale et est shuntable par un deuxième chemin de courant C2 activé transitoirement lors d'une coupure avec arc.

Application à la modulation du fonctionnement d'une charge électrique.

## Description

La présente intervention concerne un dispositif de protection et de commande pour charge électrique en courant alternatif, ce dispositif comprenant pour au moins un pôle un disjoncteur électromécanique à contacts séparables et à transfert d'arc.

Un tel dispositif, décrit dans le brevet EP-104 981, comporte un interrupteur électronique bidirectionnel qui est placé en série avec le chemin de courant direct du disjoncteur et qui est shuntable, par suite du transfert vers un chemin dérivé de l'arc consécutif à une coupure sous surintensité. Le dispositif connu utilise la commutation de l'arc pour protéger l'interrupteur électronique connecté électriquement en série avec les contacts du disjoncteur. L'interrupteur électronique vise à permettre une télécommande de la marche et de l'arrêt du dispositif et constitue donc un contacteur statique fonctionnant en tout ou rien.

Le disjoncteur-contacteur connu ne permet donc pas d'assurer un démarrage ou un ralentissement progressif du moteur, ou, plus généralement, de moduler le fonctionnement de la charge commandée et protégée.

L'invention a notamment pour but de créer, par une mesure simple, un dispositif de commande et de protection pour charge électrique qui conjugue la protection de la charge, la modulation de l'énergie fournie à la charge et l'auto-protection de l'organe modulateur.

Elle a pour autre but de faire bénéficier un organe de shuntage de l'organe modulateur de la faculté d'auto-protection engendrée par la constitution particulière du disjoncteur.

Selon l'invention, le dispositif comprend, pour au moins un pôle, un disjoncteur électromécanique muni de contacts séparables et d'une électrode de transfert d'arc située au voisinage des contacts pour capter l'arc engendré par la séparation de ceux-ci, le disjoncteur présentant un premier chemin de courant actif en marche normale et un deuxième chemin de courant qui comprend l'électrode de transfert et qui est activé transitoirement lors d'une coupure avec arc un interrupteur électronique bidirectionnel commandé par les impulsions d'un circuit de commande à modulation d'impulsions assure un fonctionnement gradué de la charge, l'interrupteur modulateur étant placé en série avec le premier chemin de courant et étant shuntable par le deuxième chemin de courant.

Le dispositif est ainsi protégé pendant les périodes de modulation, par exemple de démarrage et d'arrêt progressifs, de la charge.

De préférence, un contacteur est disposé en parallèle à l'interrupteur électronique modulateur, est transitoirement shuntable par le deuxième chemin de courant et est mis en oeuvre en dehors des périodes de démarrage et/ou d'arrêts progressifs de la charge. L'autoprotection des organes de commande de la charge est ainsi complète dans toutes les périodes de fonctionnement de celle-ci, et cela par la conjugaison d'une mesure simple et de la constitution particulière du disjoncteur du dispositif.

La description qui suit d'un mode de réalisation présenté à titre d'exemple à l'aide des dessins annexés permettra d'expliciter les caractéristiques et avantages de l'invention.

La figure 1 est le schéma simplifié d'un dispositif de protection et de commande à transfert d'arc conforme à l'invention.

La figure 2 est un schéma d'une forme d'exécution du dispositif comprenant un contacteur de shuntage.

La figure 3 représente de même, par un schéma simplifié, un dispositif de protection et de commande à inversion de sens de marche.

La figure 4 illustre le fonctionnement du dispositif de la figure 3.

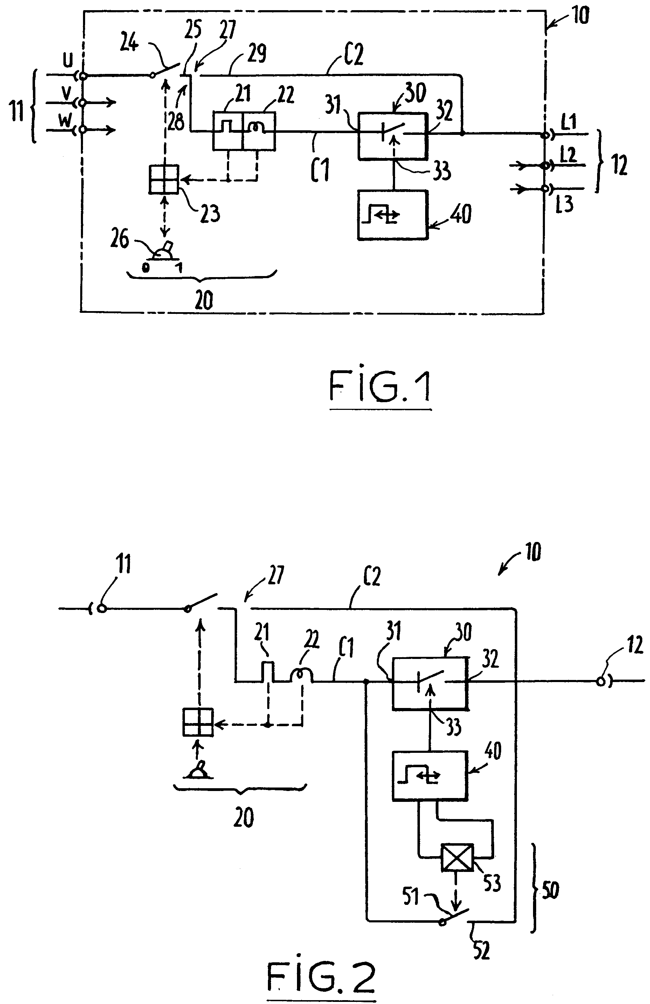

Le dispositif de commande et de protection 10 de la figure 1 est un dispositif mixte électromécanique - électronique qui comprend un disjoncteur électromécanique tripolaire 20 à transfert d'arc associé à un interrupteur électronique bidirectionnel 30 ; l'interrupteur à semi-conducteur 30 est piloté par un circuit de commande à modulation d'impulsions 40 pour moduler l'énergie fournie.

Le dispositif 10 peut être raccordé d'une part au réseau de distribution triphasé UVW par des bornes d'entrée 11, d'autre part à une charge telle qu'un moteur asynchrone triphasé par des bornes de sortie 12. Par raison de commodité, seuls sont représentés les éléments intéressant l'un des pôles du dispositif.

Le disjoncteur 20 est muni d'un déclencheur thermique 21 et d'un déclencheur magnétique 22 qui coopèrent avec un mécanisme d'ouverture et de fermeture 23 pour ouvrir des contacts séparables 24,25. Des moyens de commande manuelle d'ouverture et de fermeture 26 coopèrent également avec le mécanisme 23. A au moins une pièce conductrice 28 de contact fixe est associé un interstice 27 ou une fente d'isolement séparant la partie de la pièce conductrice 28 qui porte le contact fixe 25 proprement dit et une pièce conductrice de shuntage 29, comme il est décrit dans le brevet EP - 104 981. En marche normale, l'interstice 27 assure l'isolement électrique entre les pièces 28 et 29, tandis que lors d'une ouverture des contacts causée par la détection d'un courant de défaut, l'arc engendré entre les contacts 24, 25 franchit l'interstice 27 de la sorte, un chemin conducteur est établi brièvement entre le contact mobile 24 et la pièce 29 et le courant qui passe normalement par un premier chemin de courant C1 est dérivé transitoirement vers un deuxième chemin de courant C2.

L'interrupteur électronique 30 est connecté par une borne principale amont 31 au chemin de courant C1 pour être disposé en série avec celui-ci et il est connecté par une borne principale aval 32 au chemin de courant C2 pour éviter d'être traversé par le courant transitoire d'arc. La borne 32 est directement reliée à la borne de sortie 12.

L'interrupteur électronique présente une ou deux bornes de commande 33 reliées au circuit de commande à modulation d'impulsions 40 pour former ainsi un gradateur électronique qui est autoprotégé par sa liaison avec les chemins du courant C1, C2 du disjoncteur à transfert d'arc.

Le gradateur peut délivrer au moteur une énergie réduite par une modulation réalisée de manière permanente ou bien une énergie graduée pendant les phases de démarrage et de ralentissement de manière à en assurer la progressivité.

L'interrupteur 30 est un triac, un ensemble de deux thyristors montés tête-bêche ou tout autre interrupteur à semi-conducteur bidirectionnel commandable.

En parallèle à l'interrupteur électronique 30 peut être monté (fig. 2) de manière en elle-même connue un contacteur de shuntage 50 de type électromécanique qui comprend des contacts principaux 51, 52 reliés respectivement à la borne principale amont 31 et à la borne principale aval 32 de l'interrupteur électronique 30 ; le contacteur comprend aussi un électroaimant dont la bobine 53 a des bornes reliées au circuit de commande 40 et qui détermine l'ouverture et la fermeture des contacts 51,52. Ces contacts sont fermés lorsqu'il est souhaité d'alimenter le moteur avec une énergie non modulée.

On observe que l'autoprotection conférée par le dispositif à l'interrupteur électronique modulateur 30 dans les périodes de mise en oeuvre de celui-ci s'étend automatiquement, en dehors des périodes de modulation et sans besoin de constituants ou d'interconnexions supplémentaires, au contacteur de shuntage 50 lorsque celui-ci shunte l'interrupteur 30.

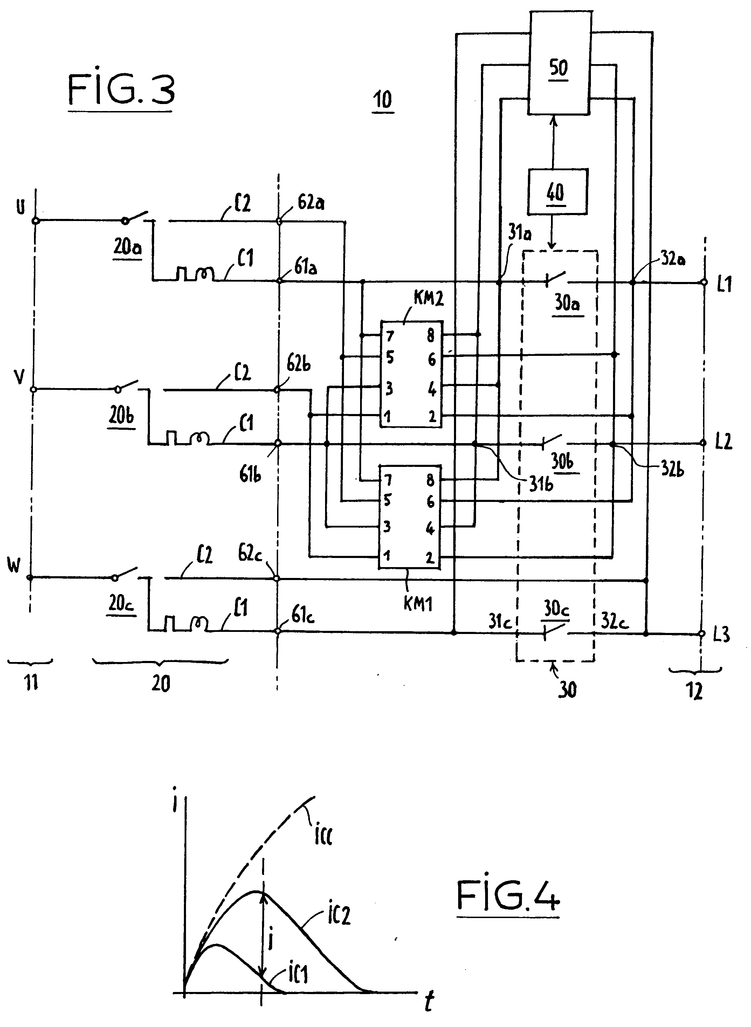

La figure 3 illustre un mode de réalisation du dispositif de protection et de commande selon l'invention, destiné à l'alimentation des phases L1, L2, L3 d'un moteur asynchrone triphasé. Le disjoncteur 20, qui n'a pas besoin d'être décrit plus en détail, présente pour ses trois pôles des bornes aval 61a, 61b, 61c reliées aux chemins de courant respectifs C1 et des bornes aval 62a, 62b, 62c reliées aux chemins de courant respectifs C2.

Deux contacteurs-inverseurs tétrapolaires KM1, KM2 ont leurs bornes d'entrée numérotées 1,3,5,7, et leurs bornes de sortie numérotées 2,4,6,8 et sont connectés de la manière suivante : leurs bornes d'entrée 1,3,5,7 sont respectivement connectées aux bornes 62b, 61b, 62a et 61 a ; les bornes de sortie correspondantes 2,4,6,8 du contacteur KM1 sont connectées respectivement aux bornes 32b, 31b de l'interrupteur électronique 30b (phase L2) et aux bornes 32a,31a de l'interrupteur électronique 30a (phase L1) ; les bornes de sortie correspondantes 2,4,6,8 du contacteur KM2 sont connectées respectivement aux bornes 32a, 31a de l'interrupteur 30a et aux bornes 32b, 31b de l'interrupteur 30b. Les bornes 61c, 62c sont pour leur part reliées en permanence aux bornes 31c, 32c de l'interrupteur 30c (phase L3). En fonction du sens de marche souhaité, c'est le contacteur KM1 ou KM2 qui est actif, l'autre étant inactif.

L'autoprotection est alors complète pour les interrupteurs 30a, 30b et 30c ainsi que pour les différents pôles du contacteur de shuntage 50 qui sont placés en parallèle sur les interrupteurs respectifs (voir figure 3). L'autoprotection est également complète pour les pôles notés 3,4 et 7,8 de chacun des contacteurs inverseurs KM1, KM2 ; l'autoprotection est partielle pour les pôles notés 1,2 et 5,6 de chacun des contacteurs inverseurs kM1, KM2 puisque ceux-ci voient passer une onde de courant qui est la différence entre l'onde de courant de coupure IC2 qui passe par le chemin dérivé C2 d'un pôle du disjoncteur (par ex. 20a) et l'onde de courant limitée IC1 qui passe par le chemin direct C1 du pôle voisin (par ex. 20b).

On voit ainsi sur la figure 4 que, pour un courant de court-circuit présumé ICC, les pôles 1,2 et 5,6 des contacteurs KM1, KM2 supportent un courant I qui est la différence entre IC1 et IC2 et sont donc moins sollicités qu'en l'absence des chemins dérivés C2. De plus, la sollicitation des interrupteurs 30 par les ondes de courant est réduite par leur fonctionnement modulé.

## Revendications

1. Dispositif de protection et de commande pour charge électrique en courant alternatif, comprenant pour au moins un pôle un disjoncteur électromécanique muni de contacts séparables et d'une electrode de transfert d'arc située au voisinage des contacts pour capter l'arc engendré par la séparation de ceux-ci, le disjoncteur présentant un premier chemin de courant actif en marche normale et un deuxième chemin de courant qui comprend l'électrode de transfert et est activé transitoirement lors d'une coupure avec arc, caractérisé par le fait qu'il est prévu un interrupteur électronique bidirectionnel (30) piloté par un circuit de commande (40) à modulation d'impulsions pour assurer un fonctionnement gradué de la charge, l'interrupteur modulateur (30) étant placé en série avec le premier chemin de courant (C1) et étant shuntable par le deuxième chemin de courant (C2).

2. Dispositif selon la revendication 1, caractérisé par le fait qu'un contacteur (50) est disposé en parallèle à l'interrupteur électronique modulateur (30), est transitoirement shuntable par le deuxième chemin de courant (C2) et est sollicité par le circuit de commande (40) pour être mis en oeuvre en dehors des périodes de modulation de l'énergie fournie à la charge.

3. Dispositif selon la revendication 2, caractérisé par le fait que le contacteur shuntable (50) est électromécanique.

4. Dispositif selon la revendication 2, pour l'alimentation d'un moteur polyphasé, caractérisé par le fait qu'un inverseur de sens de marche est connecté entre le disjoncteur (20) et l'interrupteur électronique modulateur (30).

5. Dispositif selon la revendication 4, caractérisé par le fait que l'inverseur se compose de deux contacteurs tétrapolaires (KM1, KM2) présentant des premiers pôles (3,4 7,8) susceptibles de relier les premiers chemins de courant (C1) aux bornes d'entrée (31) des interrupteurs modulables (30) et des deuxièmes pôles (1,2 ; 5,6) susceptibles de relier les deuxièmes chemins de courant (C2) aux bornes de sortie (32) des interrupteurs modulables (30).
